# FASCICULE DE BREVET EUROPEEN

(11) **EP 3 032 447 B1**
(45) Date de publication et mention de la délivrance du brevet: **26.02.2020**
(21) Numéro de dépôt: 15199374.8
(22) Date de dépôt: 10.12.2015
(51) Int. Cl.: G06F 21/10

(54) **PROCÉDÉ D'ATTRIBUTION D'UNE LICENCE PAR UN CONTRÔLEUR POUR L'UTILISATION D'UN OUTIL INDUSTRIEL TEL QU'UNE VISSEUSE ET CONTRÔLEUR ASSOCIÉ**
VERFAHREN ZUR VERGABE EINER LIZENZ ÜBER EINE STEUEREINHEIT FÜR DIE VERWENDUNG EINES INDUSTRIEWERKZEUGS, WIE ETWA EINE SCHRAUBMASCHINE, UND ENTSPRECHENDE STEUEREINHEIT
METHOD FOR ALLOCATING A LICENSE BY A CONTROLLER FOR THE USE OF AN INDUSTRIAL TOOL SUCH AS A SCREW GUN AND ASSOCIATED CONTROLLER

(30) Priorité: 11.12.2014 FR 1462258
(43) Date de publication de la demande: 15.06.2016
(73) Titulaire: Etablissements Georges Renault, 44800 Saint Herblain (FR)
(72) Inventeur: MACQUET, Laurent, 44240 La Chapelle sur Erdre (FR)
(74) Mandataire: Vidon Brevets & Stratégie

(56) Documents cités:
- US-A1- 2008 235 141
- US-A1- 2014 180 464
- Macrovision: "FLEXNET LICENSING END USER GUIDE. Version 10.8", , 1 juillet 2005 (2005-07-01), XP055225203, Extrait de l'Internet: URL:http://www.opendtect.org/images/PDF/fl exnet_licensing_end_user_guide.pdf [extrait le 2015-11-02]
- "database mirroring", , 29 novembre 2012 (2012-11-29), XP055265578, Extrait de l'Internet: URL:http://whatis.techtarget.com/definitio n/database-mirroring?vgnextfmt=print [extrait le 2016-04-14]

## Description

### 1. Domaine de l'invention

Le domaine de l'invention est celui de l'attribution d'une licence par un contrôleur pour l'utilisation d'un outil industriel tel qu'une visseuse dans une chaîne de production. L'invention concerne plus particulièrement le cas où plusieurs contrôleurs sont reliés à un même réseau et doivent gérer ensemble des licences.

### 2. Art antérieur

Dans l'industrie automobile, les systèmes de vissage asservis sont fréquemment utilisés pour réaliser le vissage de composants selon des stratégies de vissage élaborées et pour renseigner les systèmes d'enregistrement de données de production avec les résultats de vissage. Ces systèmes de vissage sont composés notamment, d'une visseuse, ou outil portable, utilisée par l'opérateur pour réaliser des vissages et, d'un contrôleur dont les fonctions seront décrites ultérieurement.

L'alimentation d'une telle visseuse peut s'effectuer de deux manières :
- alimentation par un câble. Dans ce cas, l'outil est relié au contrôleur par un câble transmettant le courant d'alimentation du moteur ainsi que les signaux de communication entre l'outil et le contrôleur. Le contrôleur intègre alors un onduleur permettant l'alimentation et le contrôle du moteur synchrone de l'outil,
- alimentation par batterie intégrée sur l'outil. Dans ce cas, l'onduleur est intégré dans l'outil ainsi qu'un microprocesseur permettant de gérer les différentes fonctions de l'outil. La communication avec le contrôleur est assurée par une liaison radio.

Ces systèmes de vissage sont aptes à appliquer sur les vis à serrer des stratégies ou « recette de vissage », elles-mêmes définies par des paramètres d'utilisation.

Les paramètres d'utilisation sont gérés par le contrôleur et définissent le fonctionnement du moteur pendant tout le travail réalisé par l'opérateur. Le contrôleur est généralement connecté à un réseau interne à l'unité de production pour la réception des recettes de vissage et autres paramètres nécessaires à la bonne utilisation de l'outil sur le poste de travail.

Les paramètres peuvent être directement programmés sur le contrôleur ou transmis au contrôleur via les réseaux informatiques dédiés à la gestion de production auxquels est relié le contrôleur.

Ainsi, il est possible d'adapter la recette de vissage aux exigences définies par le bureau d'étude ayant conçu la pièce à assembler.

L'adaptation concerne des paramètres tels que :
- serrage au couple,
- serrage à l'angle,
- serrage à la limite élastique de la vis,
- serrage avec détection accostage de la vis, etc,

D'autres fonctions peuvent être utilisées telles que :
- la possibilité de séquencer ou d'ordonnancer les serrages incluant des changements de stratégie d'un vissage à l'autre, d'inclure des actions intermédiaires etc.
- l'asservissement du système de vissage à un système de localisation conditionnant le positionnement de la visseuse sur la bonne vis avant d'autoriser le vissage avec une stratégie adaptée,
- conditionnement du fonctionnement de la visseuse à l'utilisation et la détection du bon accessoire de vissage tel que douille ou renvoi d'axe,
- l'exportation des résultats de serrage (couple, angle, courant, etc.) sur les réseaux informatiques dédiés à la gestion de production. Pour réaliser cette fonction, les contrôleurs sont connectés à un réseau informatique au sein de leur environnement industriel, par exemple, un réseau Intranet. Ce réseau permet également de transmettre des stratégies de vissage.
- l'utilisation de protocole de communication particulier.

Ces différentes fonctions peuvent constituer des options logicielles, pour lesquelles une licence d'exploitation va être concédée à l'utilisateur de système de vissage.

L'utilisation des logiciels exécutables dans les contrôleurs est généralement conditionnée par la concession d'une licence. Ces licences peuvent être de deux types :
- la licence fixe dédiée à une machine cliente en particulier et portée par cette machine cliente.
- la licence flottante qui permet l'usage d'un logiciel par plusieurs machines clientes à raison d'une seule fois au cours d'un certain laps de temps. Ce type de licence peut être géré par un serveur de licence concédant à la machine cliente un jeton sous la forme d'un code débloquant l'usage d'une fonction déjà implémentée dans le logiciel de la machine client. Le jeton peut être temporaire et donc contraint par le temps (avec une heure de fin), avec ou sans renouvellement. Le jeton peut aussi ne pas être contraint par le temps, dans ce cas, la machine fonctionne à l'arrivée du jeton qui expire lorsque la fonction exécutée par cette machine est terminée.

Dans tous les cas, l'octroi d'une licence est un droit pour utiliser un outil associé à un contrôleur selon des conditions d'utilisation déterminées et en contrepartie d'un paiement.

Un ordinateur peut être envisagé pour servir de serveur de licence, toutefois il n'est pas bien adapté aux environnements industriels agressifs et ne peut assurer la fiabilité requise pour les installations de production.

Les automates industriels sont préférés par les techniciens responsables d'installation de production. Cependant, les ordinateurs ou automates industriels supposent un coût d'achat, d'installation et de maintenance.

Le document MACROVION « FLEXNET LICENSING EN USER », publié le 1 ier juillet 2005, enseigne l'octroi de licences attribuées par un opérateur en vue d'exécuter des applications sur des ordinateurs. Ces applications peuvent faire l'objet de licences flottantes en utilisant des jetons, ou des licences fixes. Comme le montre la Figure 3.1, ce document enseigne des serveurs capables de délivrer des licences. Si l'un d'entre eux tombe en panne, un autre peut le remplacer et concéder une nouvelle.

### 3. Objectifs de l'invention

L'invention a notamment pour objectif d'apporter une solution efficace à au moins certains de ces différents problèmes.

En particulier, selon au moins un mode de réalisation, un objectif de l'invention est de fournir un procédé d'attribution de licence d'utilisation par un contrôleur serveur de licence à d'autres contrôleurs, en utilisant un réseau interne à la chaîne de production.

L'invention a pour objectif, selon un autre mode de réalisation, de fournir une nouvelle solution en cas de panne du contrôleur serveur de licence, permettant aux autres contrôleurs de continuer à fonctionner.

### 4. Présentation de l'invention

L'invention se rapporte à un procédé d'attribution d'une licence tel que revendiqué à la revendication 1

L'invention se rapporte également à un contrôleur tel que revendiqué à la revendication 9.

### 5. Liste des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :
- la figure 1 illustre un système de vissage comprenant une visseuse en communication avec son contrôleur selon un exemple de réalisation,
- La figure 2 présente les principaux éléments électroniques embarqués dans l'outil selon un exemple de réalisation,
- la figure 3 présente un exemple d'ordinogramme illustrant les principales étapes du procédé selon l'invention,
- la figure 4 représente le sous-menu d'attributions de fonctions au niveau du contrôleur serveur de licence,
- La figure 5 représente le sous-menu apparaissant sur un contrôleur suppléant,
- la figure 6 représente le sous-menu apparaissant sur un contrôleur standard.

### 6. Description de modes de réalisation particuliers

### 6.1 Principe général

L'invention concerne donc un procédé d'attribution d'une licence par un contrôleur pour l'utilisation d'un outil industriel tel qu'une visseuse. Le contrôleur serveur de licence contrôle l'utilisation d'un premier outil et communique à travers un réseau informatique avec au moins un autre contrôleur contrôlant un second outil. Le contrôleur serveur de licence dispose d'une fonction de serveur de licence pour attribuer une licence autorisant le fonctionnement du second outil. Le procédé comporte les étapes suivantes : sélection et requête par un technicien d'une fonction sur l'au moins un contrôleur standard qui nécessite l'attribution d'une licence, transmission par le contrôleur standard au contrôleur serveur de licence d'une requête d'attribution d'une licence, analyse par le contrôleur serveur de licence de la requête reçue, transmission par le contrôleur serveur de licence vers l'autre contrôleur de données autorisant l'utilisation de l'outil avec ladite fonction.

L'invention permet à un contrôleur serveur de licence d'utiliser le réseau interne de la chaîne de production pour délivrer des licences aux autres contrôleurs.

### 6.2 Description d'un mode de réalisation

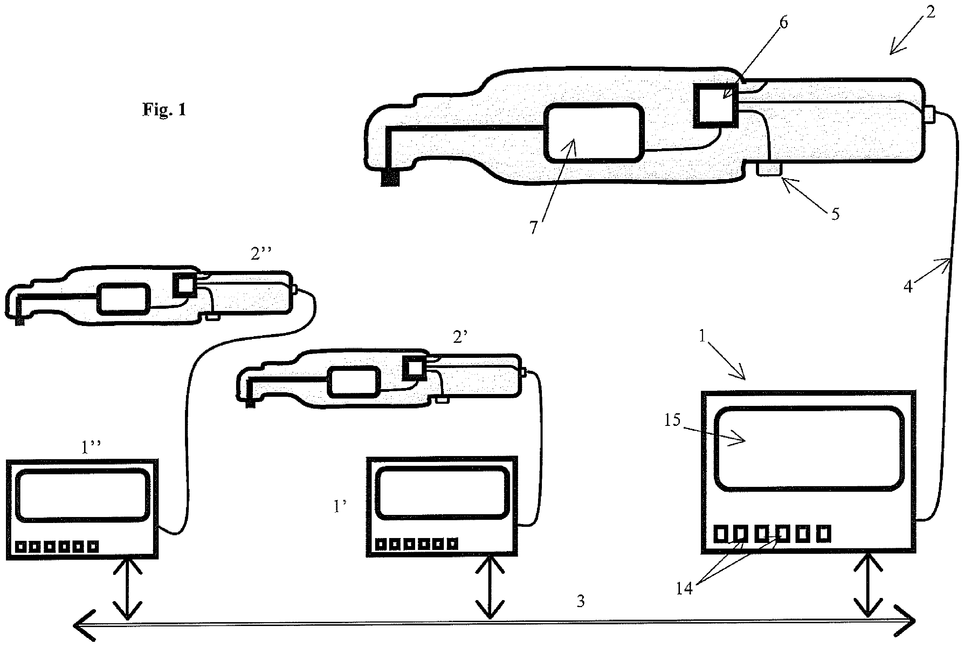

La **Fig. 1** décrit un exemple d'ensemble de postes de travail mis à la disposition des opérateurs dans une chaîne de production, et plus particulièrement de postes de travail dédiés au vissage. Plus précisément, la Fig. **1** représente un ensemble de plusieurs postes de travail connectés par un même réseau. Chaque poste comporte un contrôleur 1, 1', 1" et un outil de production 2, 2', 2", une visseuse par exemple. Les contrôleurs sont connectés à un réseau de communication 3, de préférence filaire. Le réseau qui est par exemple de type Ethernet, comprend au moins un gestionnaire de réseau organisant les transferts des données entre les différents contrôleurs.

Le terme contrôleur désigne usuellement un appareil électronique dont les fonctions sont notamment, dans le cas des outils à batterie,
- d'assurer la gestion des stratégies de vissage utilisées par la visseuse,
- de donner l'autorisation à la visseuse d'être utilisée par l'opérateur avec une stratégie donnée,
- de recevoir de la part de la visseuse les résultats de vissage (couple ou angle réels appliqués sur la vis ou encore numéro de la voiture sur laquelle l'assemblage est réalisé, ce numéro étant enregistré par un lecteur code barre situé sur la visseuse) et les transmettre au réseau intranet de l'entreprise pour enregistrement,
- gérer des séquences d'assemblage incluant des phases de vissage et ainsi que diverses autres actions (mettre un joint, positionner une pièce etc). La coordination entre le contrôleur et les capteurs, actionneurs ou écran externe est gérée via des connecteurs entrées/situées sur le contrôleur ou encore une connexion sans fil dans le cas de moyen tel que tablette ou lunette intelligente.

L'outil de production 2 est relié par un câble 4 qui sert notamment à l'alimenter, ou communique par radio (WIFI) avec son contrôleur 1, dans ce dernier cas, il possède une batterie. L'outil possède, de façon connu en soi, une commande d'utilisation, qui se présente typiquement sous la forme d'une gâchette 5. En pressant la gâchette, une unité centrale 6 intégrée dans l'outil (pour un outil à batterie et dans le contrôleur pour un outil à câble) commande le moteur 7 selon une programmation définie par le contrôleur 1. Si l'outil 2 est une visseuse, alors le contrôleur associé détermine la recette de vissage, et notamment l'évolution en fonction du temps du couple de vissage.

Le contrôleur 1 dispose d'un moyen d'introduction de commande 14, tel qu'un clavier et d'un écran 15, éventuellement tactile. Des menus s'affichent sur l'écran 15 permettant l'introduction de paramètres et la programmation des conditions d'attribution des licences. Pour les outils connectés à un câble, le contrôleur 1 assure l'alimentation en puissance du moteur 7, en plus des fonctions précédentes.

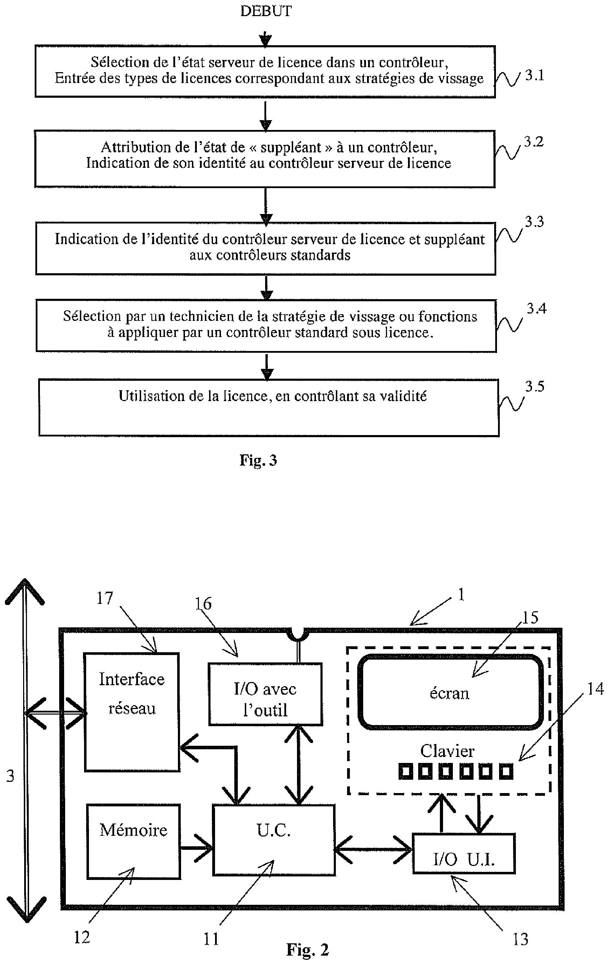

La **Fig. 2** représente un synoptique d'un contrôleur 1, 1' ou 1" destiné à commander un outil 1 tel qu'une visseuse. Selon l'exemple illustré de réalisation, le contrôleur 1 comporte une unité centrale 11 associée à un programme d'exécution enregistré dans une mémoire 12, et une interface d'entrée sortie 13, une interface utilisateur pour gérer un moyen d'introduction de commande 14 (clavier, écran tactile, souris, ...), un moyen d'affichage 15 (écran, afficheur, voyant lumineux) et éventuellement, un moyen d'émission d'un signal sonore sur une fréquence audible. Le contrôleur comporte également un moyen de communication 16 avec l'outil à l'aide d'un câble relié à un connecteur fixé sur le contrôleur. Selon ce mode de réalisation, représenté sur la **Fig. 1****,** le contrôleur dispose d'un connecteur pour l'alimentation électrique de l'outil 1 et la communication filaire. Selon une variante de réalisation, le contrôleur dispose d'un module radio 16 pour la communication. Le contrôleur 1 dispose également d'une interface réseau 17 permettant de communiquer avec d'autres contrôleurs 1' et 1" à travers le réseau 3.

Selon la présente invention, une application de gestion de licence est enregistrée dans les contrôleurs et activable en positionnant un premier drapeau. En souscrivant à une licence et en payant le prix, le contrôleur a accès à de nouvelles listes de fonctions en plus de celles standards.

Selon un premier mode de réalisation, l'application est résidente dans la mémoire 12 dès la fabrication du contrôleur ou au plus tard avant sa première utilisation dans une chaîne de production. Selon une seconde variante, l'application est téléchargée sous l'autorité d'une personne habilitée, typiquement un technicien du bureau des méthodes. Le téléchargement peut s'effectuer à travers le réseau de communication ou à l'aide d'une connexion entre une mémoire portable (clef USB par exemple) et le contrôleur. Selon un premier mode de réalisation, l'application est enregistrée à l'identique dans tous les contrôleurs, un drapeau est positionné pour l'activer, et un second drapeau est positionné pour activer dans un seul contrôleur la fonction de serveur de licence.

Après avoir détaillé les différents éléments de l'invention, nous allons maintenant expliquer comment ceux-ci coopèrent. La **Fig. 3** montre un exemple d'ordinogramme présentant les principales étapes se déroulant entre les différents appareils représentés sur les **Fig. 1** **et** **2****.**

Sur le plan de la terminologie :
- le contrôleur (identifié par la référence 1 sur la **Fig. 1**), dont l'état de serveur de licence est activée, est désigné « serveur de licence »,
- un contrôleur (identifié par la référence 1' sur la **Fig. 1**) qui n'est pas un serveur de licence, est déclaré contrôleur « standard »,
- un contrôleur identifié par la référence 1" est désigné « suppléant », son rôle sera explicité ultérieurement.

Dans un premier temps, à l'étape 3.1, un technicien sélectionne l'état de « serveur de licence », dans un contrôleur 1, à l'aide d'un sous-menu dont un exemple sera présenté par la suite dans ce document. Ensuite, il rentre les numéros et codes de la licence « serveur de licence » ce qui rend opérationnel l'état de serveur de licence dont il a fait l'acquisition. Cette fonction lui permet de gérer ultérieurement des licences pour les autres contrôleurs du réseau.

Puis, le technicien renseigne dans un sous menu, les types de licences correspondant à diverses stratégies de vissage ou à certaines fonctions, ainsi que le nombre de licences par type dont le contrôleur serveur de licence a la charge. En effet, et selon un perfectionnement, le nombre de licences attribuées par le contrôleur serveur de licence est comptabilisé. Lorsque le nombre de licences devient proche du nombre maximum de licences à attribuer (par exemple : 80 % du nombre maximum), alors un message d'alerte est émis.

Ces opérations d'activation et de rentrée de données peuvent être réalisées de différentes façons :
- saisie manuelle telle que décrite, sur l'interface du contrôleur ou via le réseau,
- par communication en champ proche (NFC) avec le contrôleur à l'aide d'une tablette ou système équivalent, suivi d'une saisie manuelle du technicien,
- connexion au contrôleur d'un support mémoire de type clé USB ou équivalent.

Le choix d'un contrôleur pour être configuré dans un état de serveur de licence peut être déterminé par sa situation géographique au sein de la chaîne de production, ou pour une autre raison.

L'application serveur de licence permet de gérer les droits relatifs aux différentes options et licences associées, et de générer et envoyer des autorisations à utiliser une licence.

A l'étape 3.2, le technicien, en prévision d'une éventuelle panne du contrôleur serveur de licence donne à un contrôleur 1", dans le sous-menu gestion de licence, le statut de « suppléant ».

Pour cela, il rentre dans un sous-menu l'adresse du contrôleur serveur de licence et valide cette entrée. Cette validation provoque l'envoi par le contrôleur suppléant d'un message au contrôleur serveur de licence contenant sa déclaration de « suppléance » ainsi que son adresse, un accusé de réception est renvoyé en retour par le contrôleur serveur de licence.

Le contrôleur suppléant est tenu informé par le contrôleur serveur de licences de l'état courant des licences attribuées par le contrôleur 1 serveur de licence en temps réel. Il est important de noter que dans un example la déclaration d'un suppléant au contrôleur serveur de licence apparaît comme une option.

A l'étape 3.3, le technicien vérifie dans un sous-menu gestion de licence des contrôleurs supposés être standard 1', que l'état sélectionné est bien «standard» (cet état est normalement par défaut, c'est à dire celui de livraison). Puis, dans le même sous-menu de gestion des licences, le technicien rentre l'identifiant du contrôleur serveur de licence (son adresse IP par exemple) et valide cet identifiant.

Cette validation provoque l'envoi d'un message au contrôleur serveur de licence qui renvoie au contrôleur standard l'adresse du contrôleur suppléant. Cet échange se termine par un accusé de réception de la part du contrôleur standard.

Puis, à l'étape 3.4, pour chaque contrôleur standard, le technicien sélectionne et valide, depuis le sous-menu gestion de licence, une option correspondant à une stratégie de vissage ou à certaines fonctions qu'il souhaite mettre en œuvre sur le contrôleur et pour laquelle il a besoin d'une licence.

A la suite de cette validation, le contrôleur standard envoie une requête d'autorisation à utiliser une licence au contrôleur serveur de licence.

Le contrôleur serveur de licence reçoit la requête et si la licence est disponible, il envoie au contrôleur standard l'autorisation d'utiliser cette licence.

Un accusé de réception de licence octroyée est renvoyé par le contrôleur standard au contrôleur serveur de licence ce qui permet à ce dernier de mettre à jour ses données de disponibilité de licence.

Dans le cas où le contrôleur serveur de licence n'a pas de licence disponible, il renvoie une alerte vers le contrôleur standard ce qui informe le technicien du manque de licence et lui permet de prendre les mesures nécessaires.

Dans le cas où le contrôleur serveur de licence ne répond pas au bout d'un certain nombre de sollicitations de la part du contrôleur standard, alors le contrôleur standard interroge le contrôleur suppléant qui, en fonction des disponibilités de licence, répond à la requête du contrôleur standard.

Lorsque le contrôleur serveur de licence sort de sa période d'indisponibilité, il reprend contact avec le contrôleur suppléant et remet à jour ses propres données relatives à la disponibilité des licences en fonction de celles contenues dans le contrôleur suppléant. Le contrôleur serveur de licence ne répond pas à aucune requête venant d'un contrôleur standard tant que cette mise à jour n'a pas été effectuée.

Enfin, à l'étape 3. 5, un contrôleur standard a obtenu la licence pour la fonction souhaitée, le technicien peut alors programmer la stratégie de vissage dans ce contrôleur avec la fonction requise.

Une fois la stratégie de vissage programmée, la visseuse peut être utilisée pour réaliser la fonction pour laquelle elle a été installée.

Le contrôleur serveur de licence possède aussi la fonction de piloter le vissage de son outil associé et de ce fait peut être amené à demander (à lui-même) une licence.

L'identifiant du contrôleur serveur de licence est avantageusement son adresse IP.

Une fois attribuée, la gestion de la validité d'une licence peut être envisagée de différentes façons :
- la licence peut être concédée de façon permanente avec un message périodique envoyé par le contrôleur standard rendant compte de l'utilisation de la licence, ceci jusqu'à ce qu'il y ait:
- soit une révision du poste de travail par un technicien et éventuellement une restitution de la licence au contrôleur serveur de licence,
- soit dans le cas de panne du contrôleur standard, une interruption des messages périodiques de ce dernier provoquant la reprise de la licence,
- la licence peut aussi être limitée dans le temps ou au nombre de serrage, le contrôleur standard informe le contrôleur serveur de licence qu'il a consommé un certain ratio (90 % par exemple) du potentiel de la licence. De cette façon, une personne habilitée est avertie qu'elle doit renouveler la licence.

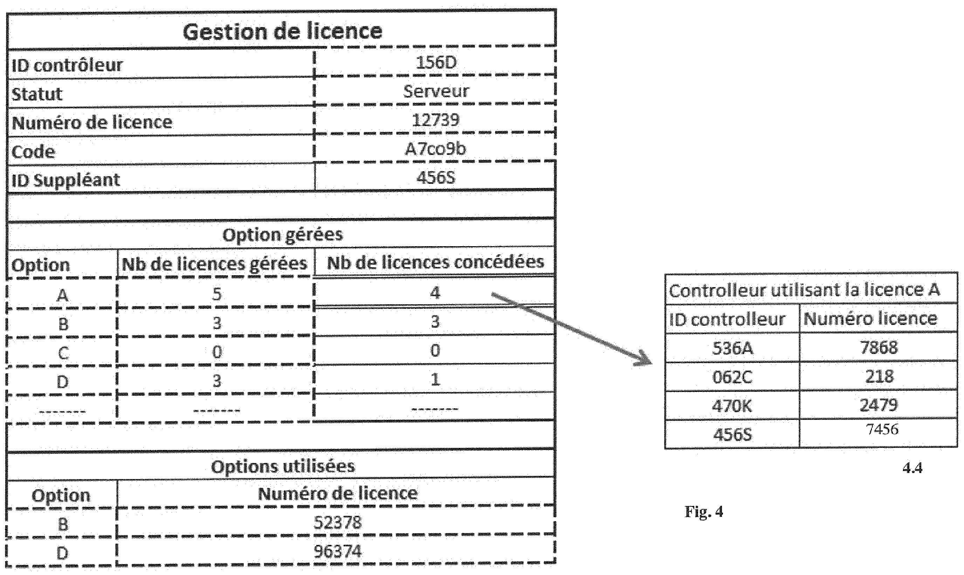

Les **Fig. 4****,** **5** et **6** présentent des exemples de plusieurs apparences d'écran montrant comment les licences sont gérées par les différents contrôleurs. Les sous menus sont accessibles à partir d'icônes apparaissant dans un menu principal.

Le sous-menu de la **Fig. 4** représente le sous-menu d'attributions de fonctions (représentées par le mot « option » dans le sous-menu) au niveau du contrôleur serveur de licence. Dans ce sous-menu, on peut constater que la fonction A, pour laquelle 5 licences sont gérées par ce contrôleur serveur de licence, a été effectivement concédée à quatre contrôleurs standards. Pour cette fonction, il reste donc une licence de disponible.

En sélectionnant le nombre (en l'occurrence « 4 ») dans le tableau, une fenêtre 4.4 fait apparaître l'identificateur de chaque contrôleur standard bénéficiant d'une licence A, et le numéro de la licence. L'identifiant du contrôleur est avantageusement son adresse IP.

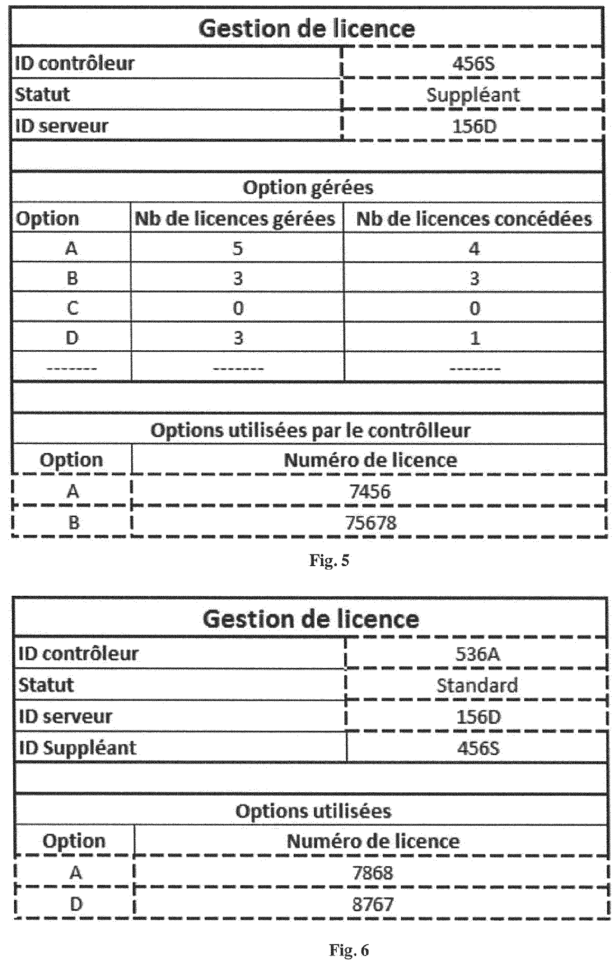

Le sous-menu de la **Fig. 5** représente le sous-menu apparaissant sur un contrôleur suppléant. Ce sous-menu présente les numéros de licences dont bénéficie ce contrôleur suppléant.

Le sous-menu de la **Fig. 6** représente le sous-menu apparaissant sur un contrôleur standard. Ce sous-menu présente les numéros de licences dont bénéficie ce contrôleur standard.

Bien que la présente invention ait été décrite en référence aux modes de réalisation particuliers illustrés, celle-ci n'est nullement limitée par ces modes de réalisation, mais ne l'est que par les revendications annexées. En particulier, l'outil concerné peut être une visseuse, une perceuse, ou tout autre outil électromécanique susceptible d'être contrôlé par un contrôleur. On notera que des changements ou des modifications pourront être apportés par l'Homme du métier.

## Revendications

1. Procédé d'attribution d'une licence par un premier contrôleur (1) dit serveur de licence pour l'utilisation d'un outil industriel (2) tel qu'une visseuse, le contrôleur serveur de licence (1) contrôlant l'utilisation d'un premier outil et communiquant à travers un réseau informatique avec au moins un second contrôleur (1') dit standard contrôlant un second outil, le premier contrôleur serveur de licence disposant d'une fonction de serveur de licence pour attribuer une licence autorisant le fonctionnement du second outil, ledit procédé comportant les étapes suivantes :
- sélection et requête par un technicien d'une fonction sur l'au moins un second contrôleur standard (1') qui nécessite l'attribution d'une licence,
- transmission par le second contrôleur standard (1') au contrôleur serveur de licence (1) d'une requête d'attribution d'une licence,
- analyse par le premier contrôleur serveur de licence (1) de la requête reçue,
- transmission par le premier contrôleur serveur de licence (1) vers le contrôleur standard (1') de données autorisant l'utilisation de l'outil avec ladite fonction,
- activation par le technicien d'une fonction de contrôleur suppléant dans un troisième contrôleur choisi pour devenir un contrôleur suppléant, ladite activation déclenchant l'émission par le contrôleur suppléant d'un message au premier contrôleur serveur de licence (1) informant qu'il est son suppléant, la réception de ce message déclenchant par le premier contrôleur serveur de licence (1) la transmission à ce troisième contrôleur en temps réel de l'état courant des licences que ce premier contrôleur (1) attribue, le contrôleur suppléant répondant aux requêtes de licences émises par le contrôleur standard en lieu et place du contrôleur serveur de licence en cas de défaillances pour attribuer des licences.

2. Procédé d'attribution d'une licence selon la revendication 1, comportant une étape de transmission d'une requête pour attribution de licence par un contrôleur standard vers un contrôleur serveur de licence.

3. Procédé d'attribution d'une licence selon l'une quelconque des revendications 1 à 2, comportant une étape d'activation de la fonction de serveur de licence dans un contrôleur choisi pour devenir un contrôleur serveur de licence.

4. Procédé d'attribution d'une licence selon l'une quelconque des revendications 1 à 3, comportant une étape d'introduction dans le contrôleur serveur de licence du type des options logicielles et du nombre de licences par option logicielle que ledit contrôleur serveur de licence peut attribuer à un contrôleur standard.

5. Procédé d'attribution d'une licence selon l'une quelconque des revendications 1 à 4, comportant une étape d'introduction au niveau de chaque contrôleur standard du réseau informatique de l'adresse IP du contrôleur serveur de licence, ladite adresse IP étant utilisée comme adresses de destination pour transmettre la requête d'attribution de licence.

6. Procédé d'attribution d'une licence selon l'une quelconque des revendications précédentes, comportant une étape de comptabilisation du nombre de licences attribuées par le contrôleur serveur de licence, et une étape d'émission d'un message d'alerte déclenchée lorsqu'un nombre déterminé de licences sont attribuées à des contrôleurs standard, le nombre déterminé étant inférieur au nombre maximum de licences à attribuer.

7. Procédé d'attribution d'une licence selon l'une quelconque des revendications précédentes, tel que la licence est concédée pour une durée donnée, le procédé comportant une étape d'émission par le contrôleur standard (1') d'un message déclenchée lorsque la durée donnée est écoulée d'un ratio déterminé.

8. Procédé d'attribution d'une licence selon l'une quelconque des revendications précédentes, tel que la licence est concédée pour un nombre donné de cycles d'utilisation du second outil, le procédé comportant une étape d'émission par le contrôleur standard (1') d'un message déclenchée lorsqu'un ratio déterminé de ce nombre donné de cycles est effectué.

9. Contrôleur (1) associé à un outil industriel (2) tel qu'une visseuse, comprenant une unité centrale (11) associée à une mémoire (12) destinée à recevoir une application exécutable, et un premier moyen de communication avec ledit outil pour lui fournir au moins des données d'utilisation et un second moyen de communication avec un réseau permettant la communication avec au moins un autre contrôleur d'un autre outil industriel, ledit contrôleur (1) comportant une application de serveur de licence autorisant l'utilisation de l'autre outil associé à un autre contrôleur dit standard en fonction de conditions d'attribution de la licence, ladite application recevant par le second moyen de communication des requêtes de licences d'utilisation provenant dudit contrôleur standard, et émettant vers ce contrôleur standard un message définissant les conditions d'attribution de la licence, ledit contrôleur comportant en outre un moyen d'activation par un technicien d'une fonction de contrôleur suppléant déclenchant l'émission d'un message à un premier contrôleur dit serveur de licence (1) informant qu'il est son suppléant et recevant de celui-ci en temps réel l'état courant des licences attribuées par ce premier contrôleur serveur de licence et répondant aux requêtes de licence émises par le contrôleur standard en lieu et place du contrôleur serveur de licence en cas de défaillance pour attribuer des licences.

## Patentansprüche

1. Verfahren zur Vergabe einer Lizenz durch eine erste Steuereinheit (1), die Lizenzserver-Steuereinheit, zur Nutzung eines Industriewerkzeugs (2), wie beispielsweise einer Schraubmaschine, wobei die Lizenzserver-Steuereinheit (1) die Nutzung eines ersten Werkzeugs steuert und über ein Computernetzwerk mit mindestens einer zweiten Steuereinheit (1'), der Standard-Steuereinheit, kommuniziert, die ein zweites Werkzeug steuert, wobei die erste Lizenzserver-Steuereinheit über eine Lizenzserverfunktion verfügt, um eine Lizenz zu vergeben, die den Betrieb des zweiten Werkzeugs gestattet, wobei das Verfahren die folgenden Schritte aufweist:
- Auswählen und Anfordern, durch einen Techniker, einer Funktion auf der mindestens einen zweiten Standard-Steuereinheit (1'), die die Vergabe einer Lizenz erfordert,
- Übertragen einer Lizenzvergabeanforderung durch die zweite Standard-Steuereinheit (1') an die Lizenzserver-Steuereinheit (1),
- Analysieren der empfangenen Anforderung durch die erste Lizenzserver-Steuereinheit (1),
- Übertragen von Daten, die die Nutzung des Werkzeugs mit der Funktion gestatten, durch die erste Lizenzserver-Steuereinheit (1) an die Standard-Steuereinheit (1'),
- Aktivieren, durch den Techniker, einer Funktion einer Stellvertreter-Steuereinheit in einer dritten Steuereinheit, die ausgewählt ist, eine Stellvertreter-Steuereinheit zu werden, wobei die Aktivierung die Sendung, durch die Stellvertreter-Steuereinheit, einer Nachricht an die erste Lizenzserver-Steuereinheit (1) auslöst, die mitteilt, dass sie deren Stellvertreter ist, wobei der Empfang dieser Nachricht die Echtzeitübertragung, durch die erste Lizenzserver-Steuereinheit (1) des aktuellen Status der Lizenzen an diese dritte Steuereinheit auslöst, die diese erste Steuereinheit (1) vergibt, wobei die Stellvertreter-Steuereinheit bei Ausfällen auf die Lizenzanforderungen, die durch die Standard-Steuereinheit gesendet werden, anstelle der Lizenzserver-Steuereinheit antwortet, um Lizenzen zu vergeben.

2. Verfahren zur Vergabe einer Lizenz nach Anspruch 1, aufweisend einen Schritt des Übertragens einer Anforderung zur Lizenzvergabe durch eine Standard-Steuereinheit an eine Lizenzserver-Steuereinheit.

3. Verfahren zur Vergabe einer Lizenz nach einem der Ansprüche 1 bis 2, aufweisend einen Schritt des Aktivierens der Lizenzserverfunktion in einer Steuereinheit, die ausgewählt ist, eine Lizenzserver-Steuereinheit zu werden.

4. Verfahren zur Vergabe einer Lizenz nach einem der Ansprüche 1 bis 3, aufweisend einen Schritt des Einführens, in die Lizenzserver-Steuereinheit, der Art der Softwareoptionen und der Anzahl von Lizenzen pro Softwareoption, die die Lizenzserver-Steuereinheit an eine Standard-Steuereinheit vergeben kann.

5. Verfahren zur Vergabe einer Lizenz nach einem der Ansprüche 1 bis 4, aufweisend einen Schritt des Einführens, an jeder Standard-Steuereinheit des Computernetzwerks, der IP-Adresse der Lizenzserver-Steuereinheit, wobei die IP-Adresse als Zieladresse zum Übertragen der Lizenzvergabeanforderung genutzt wird.

6. Verfahren zur Vergabe einer Lizenz nach einem der vorhergehenden Ansprüche, aufweisend einen Schritt des Erfassens der Anzahl von Lizenzen, die von der Lizenzserver-Steuereinheit vergeben wurden, und einen Schritt des Sendens einer Warnmeldung, die ausgelöst wird, wenn eine bestimmte Anzahl von Lizenzen an Standard-Steuereinheiten vergeben ist, wobei die bestimmte Anzahl geringer als die maximale zu vergebene Anzahl von Lizenzen ist.

7. Verfahren zur Vergabe einer Lizenz nach einem der vorhergehenden Ansprüche, so dass die Lizenz für eine gegebene Dauer gewährt wird, das Verfahren umfassend einen Schritt des Sendens einer Nachricht durch die Standard-Steuereinheit (1'), die ausgelöst wird, wenn die gegebene Dauer zu einem bestimmten Anteil verstrichen ist.

8. Verfahren zur Vergabe einer Lizenz nach einem der vorhergehenden Ansprüche, so dass die Lizenz für eine gegebene Anzahl von Nutzungszyklen des zweiten Werkzeugs gewährt wird, das Verfahren umfassend einen Schritt des Sendens einer Nachricht durch die Standard-Steuereinheit (1'), die ausgelöst wird, wenn ein bestimmter Anteil dieser gegebenen Anzahl von Zyklen ausgeführt ist.

9. Steuereinheit (1), die einem Industriewerkzeug (2), wie beispielsweise einer Schraubmaschine, zugeordnet ist, umfassend eine zentrale Einheit (11), die einem Speicher (12) zugeordnet ist, der dazu bestimmt ist, eine ausführbare Anwendung aufzunehmen, und ein erstes Mittel zur Kommunikation mit dem Werkzeug, um ihm zumindest Nutzungsdaten bereitzustellen, und ein zweites Mittel zur Kommunikation mit einem Netzwerk, das die Kommunikation mit mindestens einer anderen Steuereinheit eines anderen Industriewerkzeugs gestattet, wobei die Steuereinheit (1) eine Lizenzserveranwendung aufweist, die die Nutzung des anderen Werkzeugs, das einer anderen Steuereinheit, der Standard-Steuereinheit, zugeordnet ist, in Abhängigkeit von Vergabebedingungen der Lizenz gestattet, wobei die Anwendung durch das zweite Kommunikationsmittel Anforderungen für Nutzungslizenzen von der Standard-Steuereinheit empfängt und eine Nachricht an diese Standard-Steuereinheit sendet, die die Vergabebedingungen der Lizenz festlegt,
wobei die Steuereinheit ferner ein Mittel zum Aktivieren einer Funktion einer Stellvertreter-Steuereinheit durch einen Techniker aufweist, die die Sendung einer Nachricht an eine erste Steuereinheit, die Lizenzserver-Steuereinheit (1) auslöst, die mitteilt, dass sie deren Stellvertreter ist, und von dieser in Echtzeit den aktuellen Status der Lizenzen empfängt, die durch diese erste Lizenzserver-Steuereinheit vergeben wurden und bei Ausfällen auf die Lizenzanforderungen, die durch die Standard-Steuereinheit gesendet werden, anstelle der Lizenzserver-Steuereinheit antwortet, um Lizenzen zu vergeben.

## Claims

1. A method for allocating a licence by a first controller (1) called a licence server controller for using an industrial tool (2) such as a screwdriver, the licence server controller (1) controlling the use of a first tool and communicating through a computer network with at least one second controller (1') called standard controller controlling a second tool, the first licence server controller having a licence server function for allocating a licence authorising the operation of the second tool, said method including the following steps:
- selecting and requesting, by a technician, a function on the at least one second standard controller (1') which requires the allocation of a licence,
- transmitting a licence allocation request, by the second standard controller (1'), to the licence server controller (1),
- analysing the received request by the first licence server controller (1),
- transmitting data authorising the use of the tool with said function, by the first licence server controller (1), to the standard controller (1'),
- activating, by the technician, a substitute controller function in a third controller selected to become a substitute controller,
said activation triggering the emission, by the substitute controller, of a message to the first licence server controller (1) informing that it is its substitute, the reception of this message triggering, by the first licence server controller (1), the transmission in real time to this third controller of the current state of licences allocated by this first controller (1), the substitute controller responding to licence requests emitted by the standard controller instead of the licence server controller in the event of failures to allocate licences.

2. The licence allocation method according to claim 1, including a step of transmitting a licence allocation request by a standard controller to a licence server controller.

3. The licence allocation method according to any one of claims 1 to 2, including a step of activating the licence server function in a controller selected to become a licence server controller.

4. The licence allocation method according to any one of claims 1 to 3, including a step of entering in the licence server controller the type of software options and the number of licences per software option that said licence server controller can allocate to a standard controller.

5. The licence allocation method according to any one of claims 1 to 4, including a step of entering at each standard controller of the computer network the IP address of the licence server controller, said IP address being used as destination addresses to transmit the licence allocation request.

6. The licence allocation method according to any one of the preceding claims, including a step of counting the number of licences allocated by the licence server controller, and a step of emitting an alert message triggered when a determined number of licences are allocated to standard controllers, the determined number being less than the maximum number of licences to be allocated.

7. The licence allocation method according to any one of the preceding claims, such that the licence is granted for a given duration, the method including a step of emitting, by the standard controller (1'), a message triggered when the given duration has elapsed by a determined ratio.

8. The licence allocation method according to any one of the preceding claims, such that the licence is granted for a given number of cycles of use of the second tool, the method including a step of emitting, by the standard controller (1'), a message triggered when a determined ratio of this given number of cycles is achieved.

9. A controller (1) associated with an industrial tool (2) such as a screwdriver, comprising a central unit (11) associated with a memory (12) intended to receive an executable application, and a first means for communicating with said tool to provide it with at least usage data and a second means for communicating with a network allowing communication with at least one other controller of another industrial tool, said controller (1) including a licence server application authorising the use of the other tool associated with another controller called standard controller depending on the licence allocation conditions, said application receiving, by the second communication means, usage licence requests emmited by said standard controller, and emitting to this standard controller a message defining the licence allocation conditions,
said controller further including a means for activating, by a technician, a substitute controller function triggering the emission of a message to a first controller called licence server controller (1) informing that it is its substitute and receiving therefrom in real time the current status of the licences allocated by this first licence server controller and responding to licence requests emitted by the standard controller instead of the licence server controller in the event of failure to allocate licences.
